# EUROPÄISCHE PATENTANMELDUNG

(11) **EP 2 246 401 A1**
(43) Veröffentlichungstag der Anmeldung: **03.11.2010**
(21) Anmeldenummer: 10004320.7
(22) Anmeldetag: 23.04.2010
(51) Int. Cl.: C09J 5/00, B06B 1/06

(54) **Verfahren zum Ankleben piezokeramischer Bauelemente und Klebemittel zur Durchführung des Verfahrens**

(30) Priorität: 30.04.2009 DE 102009019667
(71) Anmelder: Valeo Schalter und Sensoren GmbH, 74321 Bietigheim-Bissingen (DE)
(72) Erfinder: Kupfernagel, Uwe, 71665 Vaihingen a.d. Enz (DE); Jung, Thomas, 74074 Heilbronn (DE); Wehling, Hans-Wilhelm, 74074 Heilbronn (DE); Frischmann, Christian, 71642 Ludwigsburg (DE); Kuhnle, Daniel, 74385 Pleidelsheim (DE)

(57) **Zusammenfassung**

Es wird ein Verfahren und ein Klebemittel zum Ankleben piezokeramischer Bauelemente (2) auf einen Trägerkörper (1) vorgeschlagen, bei dem in einem ersten Schritt ein in einem Fertigungsautomaten transportierbares Klebeband (4) hergestellt wird, das eine mit Klebeflächen (3) bedruckte Grundfolie (5) aufweist, wobei die Klebflächen (3) jeweils der Kontur des aufzuklebenden piezokeramischen Bauelements (2) entsprechen. Weiter wird das Klebeband (4) mit einer Deckfolie (7) versehen, in einem weiteren Verfahrensschritt wird zur Zusammenfügung des piezokeramischen Bauelements (2) mit der Klebefläche (3), die Deckfolie (7) entfernt und das piezokeramische Bauelement (2) jeweils auf die Klebefläche (3) aufgedrückt. In einem weiteren Verfahrensschritt wird die Grundfolie (5) entfernt und in einem letzten Verfahrensschritt wird das piezokeramische Bauelement (2) mit der anhaftenden Klebefläche (3) auf den Trägerkörper (1) aufgepresst.

## Beschreibung

### Stand der Technik

Die Erfindung betrifft ein Verfahren zum Ankleben piezokeramischer Bauelemente vorzugsweise an eine metallische Membran, insbesondere als Teil eines Ultraschallwandlers und Klebemittel zur Durchführung des Verfahrens nach den gattungsgemäßen Merkmalen der nebengeordneten Ansprüche 1 und 4.

Es werden in der Kraftfahrzeugtechnik utraschallbasierende, zum Beispiel aus der DE 102 37 721 A1 bekannte Umfelderkennungssysteme, mit mindestens einem Ultraschallsensor angewendet, wobei jeder Ultraschallsensor ein Ultraschallsignal aussendet, welches von einem möglichen Hindernis reflektiert wird und von dem gleichen Ultraschallsensor und oder von weiteren Ultraschallsensoren empfangen werden kann. Hierbei wird das Ultraschallsignal mittels eines auf der Innenseite einer tiefgezogenen oder gefrästen Aluminiumgeometrie aufgeklebten piezokeramischen Bauelements erzeugt. Die Piezokeramik wird dabei in der Regel auf eine nichtleitende Aluminiumoxidschicht der Aluminiumgeometrie mittels eines nichtleitenden Klebers aufgeklebt.

Aus der DE 10 2007 043 479 A1 ist ein Verfahren bekannt, bei dem die Oberfläche der Aluminiumgeometrie eines Ultraschallwandlers so behandelt wird, dass auf einer vorher abgeätzten und versiegelten Oberfläche mittels eines Leitklebers das piezokeramische Bauelement aufgeklebt wird.

In der Regel wird dabei das piezokeramische Bauelement mittels eines flüssigen Klebstoffs in einen Aluminiumtopf geklebt, wobei der Klebeprozess relativ aufwendig ist, da zum Aushärten des Klebstoffs ein Ofen und/oder eine UV-Lampe sowie eine gewisse Aushärtezeit notbenötigt wird.

Für sich gesehen ist darüber hinaus auch aus der EP 0 609 561 B1 bekannt, dass eine Membran für einen Ultraschallwandler aus piezokeramischem Material mittels einer beidseitig klebenden Folie mit einem Trägerkörper verklebt werden kann.

### Darstellung der Erfindung

Die Erfindung geht von einem Verfahren zum Ankleben piezokeramischer Bauelemente auf einen Trägerkörper, insbesondere eine Membran, aus, bei dem erfindungsgemäß in einem ersten Schritt ein in einem Fertigungsautomaten transportierbares Klebeband hergestellt wird, das aus einer mit Klebeflächen bedruckten Grundfolie besteht, wobei die Klebflächen in vorteilhafter Weise jeweils der Kontur des aufzuklebenden piezokeramischen Bauelements entsprechen. Dann wird das Klebepad zunächst als Schutz mit einer Deckfolie versehen und in einem weiteren Verfahrensschritt zur Zusammenfügung des piezokeramischen Bauelements mit der Klebefläche wird dann die Deckfolie entfernt und das piezokeramische Bauelement wird jeweils auf die Klebefläche aufgedrückt. In einem folgenden Verfahrensschritt wird erfindungsgemäß die Grundfolie entfernt und in einem letzten Verfahrensschritt wird das piezokeramische Bauelement mit der anhaftenden Klebefläche auf den Trägerkörper aufgepresst.

Das fertig konfektionierte Klebeband kann dabei auf einfache Weise durch beidseitig angeordnete Lochstreifen in den als Transportfolien ausgebildeten Grund- und Deckfolien im Fertigungsautomaten transportiert werden. Das piezokeramische Bauelement wird während der Bearbeitungsprozedur zum Beispiel aus einem Transportbehälter, in der Regel ein Transportröhrchen, vorzugsweise durch Unterdruck entnommen. Auf einfache Weise kann dann das piezokeramische Bauelement so positioniert werden, dass das piezokeramische Bauelement auf die jeweilige Klebefläche des zugeführten Klebebandes gedrückt wird. Die Grundfolie kann anschließend derart weggerollt werden, dass die Klebefläche am piezokeramischen Bauelement haften bleibt und mit einem Positioniersystem ist das piezokeramische Bauelement dann lagerichtig auf den Trägerkörper aufpressbar.

Als Klebemittel zur Durchführung des zuvor beschriebenen Verfahrens kommen entweder ein leitender oder ein nichtleitender Klebstoff infrage, wobei das Klebemittel zur Herstellung der Leitfähigkeit mit leitenden Pigmenten versehen werden kann.

Eine vorteilhafte Anwendung des Verfahrens und/oder des Klebemittels ergibt sich, wenn das piezokeramische Bauelement und der Trägerkörper, vorzugsweise eine metallische Membran als Boden eines Aluminiumtopfs, Bestandteile eines Ultraschallwandlers für ein Umfelderkennungssystem in einem Kraftfahrzeug sind.

Zusammenfassend ergeben sich mit der Erfindung vor allem Vorteile dadurch, dass die endgültige Festigkeit der Anordnung bereits durch ein einfaches Anpressen erreicht werden kann, weil eine ausreichende Klebekraft schon nach dem Andrücken des piezokeramischen Bauelements auf den Trägerboden, hier den Membranboden eines Ultraschallwandlers, schon erreicht hat. Das Klebemittel muss nicht mehr eine bestimmte Zeitspanne warm ausgehärtet werden und ein Ofen oder eine UV-Lampe wird nicht mehr benötigt. Der Ablauf der Fertigung muss daher nicht mehr wie bisher unterbrochen werden, was zu Kosteneinsparungen und kürzeren Prozesszeiten führt.

Auch kann beim Bedrucken der Grund- bzw. Transportfolie mit dem Kleber zur Herstellung der Klebeflächen, vorzugsweise durch Siebdruck, auf einfache Weise immer die gleiche Kleberschichtdicke eingehalten werden. Auch die Geometrie der Klebeflächen wird beim Hersteller der Grundfolie schon richtig bemessen, sodass kein zusätzlicher Trennvorgang oder ein Vereinzeln der einzelnen Klebeflächen notwendig ist. Die Klebflächen können einfach auf einer großen Endlosrolle angeliefert werden. Ein besonderer Vorteil der schon fertig dosierten Klebefläche ist daher die Einfachheit der Verklebung ohne eine teure Dosiereinheit und, wie schon erwähnt, der Wegfall der heute üblichen thermischen Aushärtung des Klebers.

### Kurze Beschreibung der Zeichnung

Ein Ausführungsbeispiel der Erfindung wird anhand der Figuren der Zeichnung erläutert. Es zeigen:
Figur 1 einen Schnitt durch einen Trägerkörper mit einem aufgeklebten piezokeramischen Bauelement als Ultraschallwandler.
Figur 2 einen schematischen Schnitt durch ein erfindungsgemäßes Klebeband mit Grundfolie, Klebefläche und Deckfolie zur Aufbringung des piezokeramischen Bauelements.
Figur 3 einen Schnitt durch das Klebeband nach der Figur 2 mit abgerollter Deckfolie.
Figur 4 einen Schnitt durch das Klebeband nach der Figur 3 mit aufgesetztem piezokeramischen Bauelement auf einer Klebefläche.
Figur 5 einen Schnitt durch das Klebeband nach der Figur 4 mit abgerollter Grundfolie.
Figur 6 eine Draufsicht auf das Klebeband mit Lochstreifen zum Transport.

### Weg zur Ausführung der Erfindung

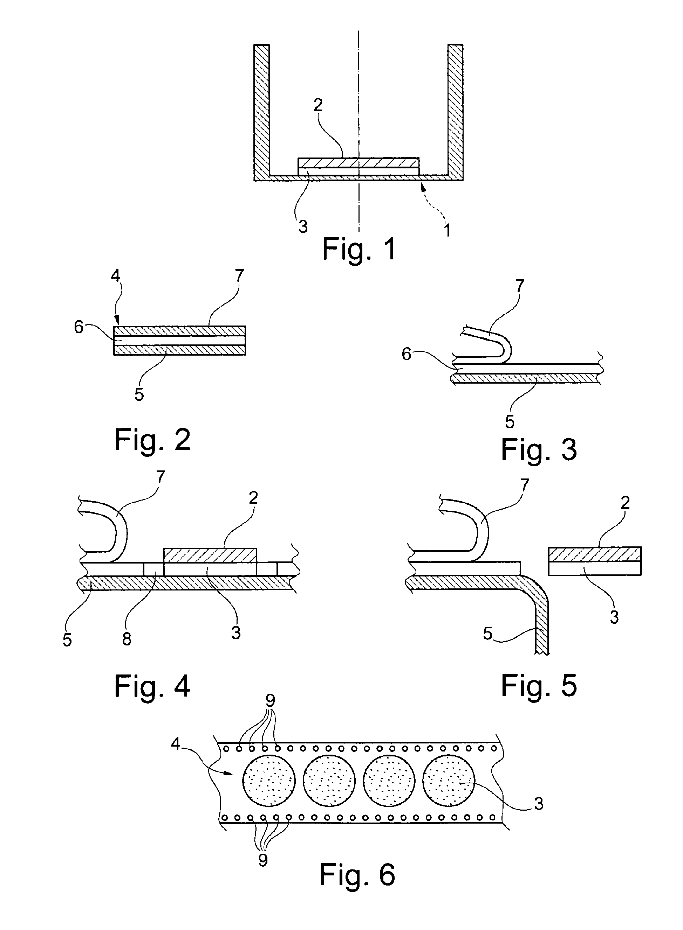

In Figur 1 ist gezeigt, wie im Inneren eines im unteren Teil als Membran ausgebildeten Trägerkörpers 1 ein piezokeramisches Bauelement 2 als Ultraschallwandler mittels einer Klebefläche 3 als Klebemittel auf den Trägerkörper 1 zum Beispiel elektrisch leitend aufgeklebt ist. Das piezokeramische Bauelement 2 stellt hierbei ein Bauteil mit relativ glatter Oberfläche dar und der Trägerkörper 1 ist in der Regel ein im Boden eine Membran bildender Alumniumtopf, der eine relativ raue Oberfläche hat, wobei die beiden mit der Klebefläche einfach verbunden werden können.

Anhand der folgenden Figuren soll nun das erfindungsgemäße Verfahren zur Aufklebung des piezokeramischen Bauelements 2 auf den Trägerkörper 1 erläutert werden.

Figur 2 zeigt schematisch ein Klebeband 4 mit einer Grundfolie 5, einer Klebeschicht 6 und einer Deckfolie 7 als Hilfsmittel zur Aufbringung des piezokeramischen Bauelements 2. Figur 3 zeigt einen Schnitt durch das Klebeband 4 nach der Figur 2 mit der abgerollten Deckfolie 7 und in Figur 4 ist dargestellt, wie das Klebeband 4 nach den vorhergehenden Figuren mit dem aufgesetzten piezokeramischen Bauelement 2 auf der separierten Klebefläche 3 versehen wird. Die Separierung der Klebeflächen 3 kann durch ein entsprechendes Siebdruckverfahren hergestellt werden, sodass Bereiche 8 auf dem Klebeband 4 entstehen, die keinen Kleber aufweisen.

Als Klebemittel kommen hier beispielsweise leitende Kleber, wie anisotrop in z-Richtung leitende Acrylatklebstoffe, in Frage. Die Kleberdicke kann zum Beispiel 51 µm betragen und die Grundfolie 5 und die Deckfolie 7 können aus oben oder unten für den Kleber mit PE- beschichtetem Kraftpapier bestehen. Als nichtleitender Kleber kommt zum Beispiel ein permanenter Acrylatklebstoff auf Lösemittelbasis mit einer Kleberdicke von ca. 54 µm in Frage, wobei die Folien 5 und 7 hier oben oder unten für den Kleber beschichtetes Glassinepapier sein können.

Zur Bildung des Verfahrensschrittes nach der Figur 4 kann das piezokeramische Bauelement 2 vorzugsweise durch Unterdruck aus einem Transportröhrchen angesaugt werden. Das piezokeramische Bauelement 2 wird dann auf eine Klebfläche 3 abgelegt, wobei zuvor zum Beispiel mit einem Kamerasystem die Klebefläche 3 geometrisch identifiziert werden kann, sodass das piezokeramische Bauelement 2 durch das Kamerabild dann lagerichtig entnommen werden kann und mit einem Positioniersystem mit der Unterseite auf die der Größe des piezokeramischen Bauelements 2 angepasste Klebefläche 3 gedrückt werden kann.

Gemäß Figur 5 wird nun auf der Rückseite des Klebebandes 4 die Grundfolie 5 weggerollt, sodass die Klebefläche 3 als Klebepad nur noch an der Rückseite des piezokeramischen Bauelements 2 haftet. Das zuvor erwähnte hier nicht näher beschriebene Positioniersystem platziert jetzt das piezokeramische Bauelement 2 mit der Klebefläche 3 lagerichtig auf den Membranboden des Trägerkörpers 1 gemäß der Figur 1 und presst dann das piezokeramische Bauelement 2 zum Verkleben an den Membranboden.

In Figur 6 ist noch eine Draufsicht auf das Klebeband 4 mit Lochstreifen 9 zum Transport des Klebebandes 4 im Fertigungsautomaten, der das Positioniersystem zur Durchführung der Verfahrensschritte beinhaltet, und den darauf aufgedruckten Klebeflächen 3 gezeigt.

## Patentansprüche

1. Verfahren zum Ankleben piezokeramischer Bauelemente (2) auf einen Trägerkörper (1), **dadurch gekennzeichnet, dass** in einem ersten Schritt ein in einem Fertigungsautomaten transportierbares Klebeband (4) hergestellt wird, das eine mit Klebeflächen (3) bedruckte Grundfolie (5) aufweist, wobei die Klebflächen (3) jeweils der Kontur des aufzuklebenden piezokeramischen Bauelements (2) entsprechen, dass das Klebeband (4) mit einer Deckfolie (7) versehen wird, dass in einem weiteren Verfahrensschritt zur Zusammenfügung des piezokeramischen Bauelements (2) mit der Klebefläche (3) die Deckfolie (7) entfernt wird und das piezokeramische Bauelement (2) jeweils auf die Klebefläche (3) aufgedrückt wird, dass in einem weiteren Verfahrensschritt die Grundfolie (5) entfernt wird und dass in einem letzten Verfahrensschritt das piezokeramische Bauelement (2) mit der anhaftenden Klebefläche (3) auf den Trägerkörper (1) aufgepresst wird.

2. Verfahren nach Anspruch 1, **dadurch gekennzeichnet, dass** das Klebeband (4) durch beidseitig angeordnete Lochstreifen (9) in den als Transportfolien ausgebildeten Grund- und Deckfolien (5,7) im Fertigungsautomaten transportiert wird.

3. Verfahren nach Anspruch 1 oder 2, **dadurch gekennzeichnet, dass** das piezokeramische Bauelement (2) aus einem Transportbehälter vorzugsweise durch Unterdruck entnommen wird, dass das piezokeramische Bauelement (2) so positioniert wird, dass das piezokeramische Bauelement (2) auf die jeweilige Klebefläche (3) gedrückt wird, dass die Grundfolie (5) derart weggerollt wird, dass die Klebefläche (3) am piezokeramischen Bauelement (2) haften bleibt und dass mit einem Positioniersystem das piezokeramische Bauelement (2) lagerichtig auf den Trägerkörper (1) gepresst wird.

4. Klebemittel zur Durchführung des Verfahrens nach einem der vorhergehenden Ansprüche, **dadurch gekennzeichnet, dass** das Klebemittel in den Klebeflächen (3) ein leitender Klebstoff ist.

5. Klebemittel nach Anspruch 4, **dadurch gekennzeichnet, dass** das Klebemittel ein anisotrop in z-Richtung leitender Acrylatklebstoff ist.

6. Klebemittel zur Durchführung des Verfahrens nach einem der Ansprüche 1 bis 3, **dadurch gekennzeichnet, dass** das Klebemittel in den Klebeflächen (3) ein nichtleitender Klebstoff ist.

7. Klebemittel nach Anspruch 6, **dadurch gekennzeichnet, dass** das Klebemittel ein permanenter Acrylatklebstoff auf Lösemittelbasis ist.

8. Klebemittel nach Anspruch 4 oder 5, **dadurch gekennzeichnet, dass** das Klebemittel mit leitenden Pigmenten versehen ist.

9. Anwendung eines Verfahrens und/oder eines Klebemittels nach einem der vorhergehenden Ansprüche, **dadurch gekennzeichnet, dass** das piezokeramische Bauelement (2) Bestandteil eins Ultraschallwandlers für ein Umfelderkennungssystem in einem Kraftfahrzeug ist, wobei das piezokeramische Bauelement (2) auf einen Membranboden des Trägerkörpers (1) geklebt ist.
